# EUROPÄISCHE PATENTANMELDUNG

(11) **EP 1 195 186 A1**
(43) Veröffentlichungstag der Anmeldung: **10.04.2002**
(21) Anmeldenummer: 01115452.3
(22) Anmeldetag: 27.06.2001
(51) Int. Cl.: B01D 21/02, B01D 21/04, B01D 21/06, B01D 21/18, B01D 21/20

(54) **Rundbeckenräumer**

(30) Priorität: 07.10.2000 DE 10049713
(71) Anmelder: Passavant-Roediger Umwelttechnik GmbH, 65322 Aarbergen (DE)
(72) Erfinder: Scheid, Klaus, 65597 Hünfelden (DE); Huth, Robert, 63776 Mömbris (DE)
(74) Vertreter: KEIL & SCHAAFHAUSEN

(57) **Zusammenfassung**

Die Erfindung betrifft einen Rundbeckenräumer (1; 31), insbesondere für Klärbecken (3; 32) mit Belebtschlamm enthaltender Flüssigkeit. In dem Becken (3; 32) rotiert ein Räumerarm (2; 37), an dem ein Bodenräumwerk (4) und ein Schwimmschlammräumwerk (5) angeordnet sind. Das Bodenräumwerk (4) und das Schwimmschlammräumwerk (5) sind in radialer Richtung des Beckens (3) wirkende Räumwerke (15, 19; 41).

## Beschreibung

Die Erfindung betrifft einen Rundbeckenräumer, insbesondere für Klärbecken mit Belebtschlamm enthaltender Flüssigkeit, mit wenigstens einem um den Mittelpunkt des Beckens rotierenden Räumerarm, an dem ein Bodenräumwerk und ein Schwimmschlammräumwerk angeordnet sind.

Kommunale und industrielle Abwässer werden in Kläranlagen mechanisch und biologisch gereinigt. Zur biologischen Abwasserreinigung wird u.a. Belebtschlamm eingesetzt, also ein Schlamm, der Mikroorganismen enthält, die das zu klärende Abwasser von Schadstoffen reinigen. Dieser Belebtschlamm muss vor einer Rückführung des Wassers in den Wasserkreislauf wieder aus dem Wasser entfernt werden. Hierzu dienen Klärbecken, in denen Schlammbestandteile mit einem höheren spezifischen Gewicht als Wasser sich am Boden absetzen, während andere Schlammbestandteile mit einem niedrigeren spezifischen Gewicht als Wasser als Schwimmschlamm zur Oberfläche aufsteigen. In diesen Absetzbecken werden Schwer- und Leichtstoffe durch den Einfluss der Schwerkraft vom Abwasser getrennt. Dieses Verfahren eignet sich sowohl für die Vor-, Zwischen- und Nachklärung als auch für Regenklärbecken.

Es ist bekannt, in runden Klärbecken Räumsysteme einzusetzen, die die Aufgabe haben, den am Boden abgesetzten Schlamm zu einem Schlammsammeltrichter zu fördern und gleichzeitig durch eine Schwimmschlammräumeinrichtung die Wasseroberfläche von Schwimmstoffen freizuhalten. Hierbei muss vermieden werden, dass abgesetzter Schlamm oder Schwimmstoffe wieder aufgewirbelt werden. Derartige Räumsysteme werden an Räumarmen oder Räumbrücken eingesetzt, die in dem Rundbecken rotieren. Über eine in radialer Richtung gekrümmte Ausgestaltung der Räumsysteme wird erreicht, dass der Schwimmschlamm und der Bodenschlamm entweder zur Mitte des Rundbeckens oder an dessen Rand befördert werden. Dort kann der Schlamm über einen Sammeltrichter, einen Überlauf oder eine Absaugung aus dem Becken befördert werden. Die Hauptbewegungskomponente des Schlammes liegt dabei in Rotationsrichtung des Räumsystems, während der Schlamm nur zu einem geringen Anteil auf den Sammeltrichter zu bewegt wird. Hierdurch entsteht bei derartigen Räumsystemen ein vergleichsweise hoher Energieverbrauch.

Um Verwirbelungen von Schlamm in dem Becken zu vermeiden, muss der Räumerarm bzw. die Räumerbrücke mit sehr niedrigen Drehzahlen in dem Rundbecken rotieren. Auf diese Weise werden jedoch nur geringe radiale Geschwindigkeitskomponenten des Boden- oder Schwimmschlamms erreicht, so dass der Abtransport des Schlamms nicht effektiv ist. Um den Bodenschlamm leichter einem zentralen Sammeltrichter zuzuführen, wird der Boden des Beckens häufig mit einem Gefälle zur Beckenmitte hin gestaltet. Dadurch steigen jedoch die Baukosten des Beckens und auch die Räumsysteme müssen individuell an die Neigung des Beckenbodens angepasst werden. Gerade bei Schwimmschlamm entsteht zudem das Problem, dass schon bei geringen Windstärken eine Schwimmschlammabfuhr nicht mehr ausreichend möglich ist.

Weiterhin ist es bekannt, in rechteckigen Absetzbecken die durch den Einfluss der Schwerkraft vom Abwasser getrennten Schlammpartikeln durch Schleppräumwerke oder Bandräumer abzutransportieren. Schleppräumer weisen ein am Beckenboden entlang geschlepptes Räumschild auf, das den am Boden abgesetzten Schlamm zu einem Schlammtrichter befördert. Für den Rücktransport durch das Klärbecken wird das bekannte Schleppräumwerk angehoben. Im Gegensatz zu kontinuierlich rotierenden Rundbeckenräumern weisen Schleppräumwerke jedoch den Nachteil auf, dass das Räumschild nach jedem Arbeitsgang in die Ausgangsposition zurückbewegt werden muss. Dies ist zeitaufwendig und verursacht zudem Verwirbelungen im Abwasser, die ein effizientes Sedimentieren stören.

Zur Vermeidung derartiger Nachteile wurden bereits Bandräumer vorgeschlagen, die in dem Rechteckbecken umlaufen und auf einem ersten Pfad am Beckenboden abgesunkenen Schlamm zu einem Schlammtrichter räumen, während sie auf einem zweiten Pfad an der Wasseroberfläche Schwimmschlamm zu einem zweiten Sammeltrichter befördern. Die Ausgestaltung der Schlammsammeitrichter wird jedoch beim Einsatz eines Bandräumers kompliziert. Zudem ist es erforderlich, dass sich der Bandräumer über die gesamte Breite des Rechteckbeckens erstreckt. Hierdurch steigen jedoch die Anschaffungs- und Unterhaltskosten der Bandräumer.

Aufgabe der Erfindung ist es daher, einen Rundbeckenräumer der eingangs genannten Art bereitzustellen, der in unterschiedlich großen Klärbecken bei geringen Herstellkosten einsetzbar ist und dabei eine besonders effektive Abfuhr von durch den Einfluss der Schwerkraft vom Abwasser getrennten Schwer- und Leichtstoffen aus dem Becken ermöglicht.

Diese Aufgabe wird im Wesentlichen dadurch gelöst, dass das Bodenräumwerk und das Schwimmschlammräumwerk in radialer Richtung des Beckens wirkende Räumwerke sind. Schwer- und Leichtstoffe, die sich durch den Einfluss der Schwerkraft getrennt haben, lassen sich auf diese Weise besonders wirkungsvoll aus dem Becken zu einer Schlammsammeleinrichtung transportieren. Die Hauptbewegungskomponente des Schlammes ist damit radial zum Beckenrand oder zur Beckenmitte gerichtet, während die Bewegungskomponente in Umlaufrichtung des Räumerarmes minimiert wird. Die Antriebsenergie wird dadurch zur Abfuhr des Schlammes aus dem Becken genutzt und nur zu einem geringen Anteil zur Zirkulation in dem Becken. Daher arbeitet der erfindungsgemäße Rundbeckenräumer besonders effektiv.

Vorzugsweise weisen das Bodenräumwerk und das Schwimmschlammräumwerk jeweils einen Bandräumer mit mehreren voneinander beabstandeten Räumbalken auf, die in radialer Richtung in dem Becken umlaufen. Bandräumer eignen sich besonders gut zur Abfuhr von Schlamm, der sich am Beckenboden oder an der Wasseroberfläche in dem Becken abgesetzt hat. Durch Bandräumer kann ein sehr zielgerichteter Transport zur Beckenmitte oder zum Beckenrand erfolgen, wobei durch geeignete Wahl der Rotationsgeschwindigkeit des Räumerarmes und der Bandräumer sichergestellt werden kann, dass bei einem Umlauf des Räumerarmes die gesamte Beckenfläche durch die Bandräumer überstrichen wird. Zudem können derartige mit Räumbalken oder Räumschild ausgestattete Bandräumer auch große Mengen Schlamm sehr effektiv in dem Becken transportieren, ohne dass abgesetzter Schlamm wieder aufgewirbelt wird.

Ein an den Räumbalken angeordnetes Schottblech, das bei Rotation des Räumerarms dem Räumbalken nachläuft, gewährleistet, dass von den Räumbalken transportierter Schlamm aufgrund der Rotationsbewegung der an dem Räumerarm befestigten Bandräumer vollständig zum Beckenrand oder zur Beckenmitte transportiert wird. Das Schottblech schließt dabei zweckmäßigerweise bündig an die einzelnen Räumbalken der Bandräumer an, so dass ein Austreten von Schlamm zwischen dem Räumbalken und dem Schottblech vermieden wird.

Wenn das Bodenräumwerk und das Schwimmschlammräumwerk jeweils voneinander getrennte Antriebe aufweisen, ist es möglich, das Bodenräumwerk und das Schwimmschlammräumwerk unabhängig voneinander zu betätigen, beispielsweise mit unterschiedlichen Geschwindigkeiten. Außerdem ist bei Ausfall einer der beiden Antriebe zumindest noch eine Schlammabfuhr durch den anderen Antrieb möglich.

Der Bandräumer des Bodenräumwerks bewegt die Räumbalken vorzugsweise entlang eines ersten Pfades am Beckenboden von außen zur Mitte des Beckens hin und führt sie entlang eines zweiten Pfades oberhalb des ersten Pfades von der Mitte des Beckens nach außen zurück. Der zum Boden abgesunkene Schlamm kann auf diese Weise einem konstruktionsbedingt oft in der Beckenmitte angeordneten Schlammsammeltrichter zugeführt werden. Weiterhin wird auf diese Weise das Abrutschen von Schlamm am Beckenboden zu der zumeist im Vergleich zum Beckenrand abgesenkten Mitte unterstützt. Bei Neubauten eines Beckens ist das Absenken der Beckenmitte jedoch nicht erforderlich, da der Schlamm durch das Bodenräumwerk dem Schlammtrichter zugeführt wird. Folglich können die Baukosten für neue Becken erheblich reduziert werden.

Vorzugsweise weist der Bandräumer des Bodenräumwerks dabei eine angetriebene und eine frei drehbare Umlenkrolle auf. Es ist also möglich, mit nur zwei Umlenkrollen das Bodenräumwerk zu bilden. Der Konstruktionsaufwand und die Herstellkosten können auf diese Weise gering gehalten werden.

In Weiterbildung dieses Erfindungsgedankens ist vorgesehen, dass der Bandräumer des Schwimmschlammräumwerks die Räumbalken entlang eines ersten Pfades bereichsweise in die Flüssigkeitsoberfläche des Beckens eingetaucht von außen zur Mitte des Beckens hin bewegt und entlang eines zweiten Pfades oberhalb des ersten Pfades von der Mitte des Beckens nach außen zurückführt. Der Schwimmschlamm kann auf diese Weise einem zentral angeordneten Schlammsammeltrichter zugeführt werden. Gleichzeitig wird ein beispielsweise am Beckenrand angeordneter Ablauf für das gereinigte Wasser von Schwimmschlamm freigehalten. Durch das Zurückführen der Räumbalken entlang des zweiten Pfades, der oberhalb des ersten Pfades, also außerhalb der Flüssigkeit verläuft, werden Verwirbelungen des Schwimmschlamms an der Flüssigkeitsoberfläche vermieden.

Der Schwimmschlamm wird zuerst von dem Wasser getrennt, bevor er in den Schlammabzug oder Schlammsammeltrichter befördert wird, falls der Bandräumer des Schwimmschlammräumwerks die Räumbalken zwischen dem ersten und dem zweiten Pfad entlang eines weiteren Pfades bewegt, auf dem die Räumbalken entlang einer in einen Schlammabzug mündenden Rampe aus der Flüssigkeit gehoben werden. Auf diese Weise wird verhindert, dass ein zu hoher Anteil von gereinigtem Wasser zusammen mit dem Schwimmschlamm aus dem Becken entfernt wird.

Vorzugsweise weist der Bandräumer des Schwimmschlammräumwerks eine angetriebene und zwei frei drehbare Umlenkrollen auf. Die Herstellung und Konstruktion des Schwimmschlammräumwerks kann auf diese Weise einfach und damit kostengünstig gehalten werden.

Der Rundbeckenräumer arbeitet besonders wirtschaftlich, wenn das Bodenräumwerk und das Schwimmschlammräumwerk nach einer weiteren Ausführungsform durch einen gemeinsamen Bandräumer gebildet werden. Am Boden des Beckens arbeitet der Bandräumer dabei als Bodenräumwerk, während er gleichzeitig an der Flüssigkeitsoberfläche als Schwimmschlammräumwerk betätigt wird. Mit einem vollständigen Umlauf des Bandräumers wird somit sowohl der Beckenboden als auch die Flüssigkeitsoberfläche von Schlamm befreit. Zudem ist es einer Kontrollperson leicht möglich die Funktion und den Zustand des Bodenräumwerks ohne Stillstandszeiten zu überprüfen, da das Bodenräumwerk und das Schwimmschlammräumwerk in einem bereichsweise an der Flüssigkeitsoberfläche arbeitenden Bandräumer zusammengefasst sind, der auch außerhalb des Beckens sichtbar ist.

Dabei wird es bevorzugt, dass der gemeinsame Bandräumer des Bodenräumwerks und des Schwimmschlammräumwerks die Räumbalken entlang des Beckenbodens von außen zur Mitte des Beckens hin bewegt und entlang der Oberfläche der Flüssigkeit von der Mitte des Beckens nach außen zurückführt. Dadurch wird ebenfalls bei Neubauten eines Beckens die kostengünstigere Bauweise mit einem flachen Beckenboden möglich.

Eine besonders bevorzugte Ausführungsform sieht vor, dass das Bodenräumwerk und das Schwimmschlammräumwerk einen gemeinsamen Antrieb aufweisen. Dadurch können die Herstellungskosten für einen Rundbeckenräumer gesenkt werden. Gleichzeitig kann die Funktion des Bodenräumwerks bei laufendem Schwimmschlammräumwerk leicht festgestellt werden, ohne den Betrieb zu unterbrechen.

Die Anzahl der Antriebskomponenten kann nochmals deutlich reduziert werden, indem der Antrieb des Räumerarms gleichzeitig das Bodenräumwerk und das Schwimmschlammräumwerk antreibt.

Vorzugsweise sind an einem zentralen Mittelbauwerk, um das der Räumerarm umläuft, feststehende erste Kraftübertragungsmittel und an dem Räumerarm mit diesem umlaufende zweite Kraftübertragungsmittel angebracht, die miteinander in Eingriff stehen, wobei die zweiten Kraftübertragungsmittel das Bodenräumwerk und/oder das Schwimmschlammräumwerk antreiben. Dies kann beispielsweise über ein Getriebe realisiert werden, das bei Rotation des Räumerarmes um die Beckenmitte diese Drehbewegung in eine radiale Bewegung des Bandräumers umsetzt. Durch den Einsatz eines einzigen Antriebsmotors können die Herstellungskosten des Rundbeckenräumers weiter minimiert werden. Zudem kann auf diese Weise auf den Einsatz teurer und wartungsaufwendiger Schleifringe zur Energieversorgung des Bandräumers verzichtet werden.

Nach einer bevorzugten Ausführungsform der Erfindung umfassen die ersten Kraftübertragungsmittel einen an dem zentralen Mittelbauwerk ortsfest angeordneten ersten Zahnkranz und die zweiten Kraftübertragungsmittel einen an dem Räumerarm drehbar gelagerten zweiten Zahnkranz, die über eine erste Kette miteinander verbunden sind. Der Antrieb des Bodenräumwerks und/oder des Schwimmschlammräumwerks kann in Weiterbildung dieses Gedankens dadurch realisiert werden, dass diese jeweils einen Antriebszahnkranz aufweisen, der über eine zweite Kette mit dem Abtriebszahnkranz eines Umlenkgetriebes verbunden ist, welches mit dem zweiten Zahnkranz in Verbindung steht. Auf diese Weise werden das Bodenräumwerk und/oder das Schwimmschlammräumwerk durch die Rotation des Räumerarmes um das Mittelbauwerk durch den Antriebsmotor des Räumerarmes angetrieben. Bei den für die angetriebenen Komponenten in einem Rundbeckenräumer üblichen niedrigen Drehzahlen ist ein Kettenantrieb besonders wartungsarm, so dass die Betriebskosten der gesamten Anlage gering gehalten werden können.

Es wird bevorzugt, dass der Räumerarm aus einem modularen Stabfachwerk besteht. Mit geringen konstruktiven Änderungen kann der erfindungsgemäße Rundbeckenräumer damit in Rundbecken unterschiedlichen Durchmessers und unterschiedlicher Höhe eingesetzt werden. Durch die modulare Bauweise werden die Herstell- und Konstruktionskosten gesenkt. Insbesondere werden auch die Transportkosten durch einen modularen Aufbau aus einzelnen Stabelementen auf ein Minimum reduziert, wobei der Rundbeckenräumer erst am Einsatzort montiert wird. Weiterhin ist es auch möglich, einzelne Module zu Reparaturzwecken auszutauschen oder bestehende Anlagen durch neue Module auf- oder umzurüsten. An einem derartigen modularen Stabfachwerk können zudem neben Boden- und Schwimmschlammräumwerken auch weitere Funktionselemente angebracht werden, wie beispielsweise Geräte zum Einbringen von Sauerstoff in das Abwasser.

Das Gewicht des Räumerarms kann ohne Belastung des Antriebs aufgenommen werden, indem der Räumerarm am Beckenboden auf Führungsrollen gelagert ist, die dem Bodenräumwerk nachlaufen. Eine kostenintensive Bereitstellung einer gesonderten Laufschiene am Beckenrand oder einer entsprechend präparierten Beckenkrone als Lauffläche entfällt somit. Dies erleichtert auch das Vorsehen einer Abdeckung des Beckens, die zur Vermeidung einer Geruchsbelästigung der Umgebung vielfach vorgeschrieben wird.

In Weiterbildung der Erfindung ist es vorgesehen, dass der Räumerarm als Doppelbrücke ausgebildet ist, die den gesamten Durchmesser des Beckens überspannt. Bei der zur Vermeidung von Verwirbelungen vorgegebenen langsamen Rotationsgeschwindigkeit des Räumerarms kann durch die Ausbildung als Doppelbrücke erreicht werden, dass der Abtransport von Schwimm- und Bodenschlamm effektiver gestaltet wird.

Die Erfindung wird nachfolgend anhand von Ausführungsbeispielen und der Zeichnung näher erläutert.

Es zeigen:
- Fig. 1: eine schematische Seitenansicht eines erfindungsgemäßen Rundbeckenräumers nach einer ersten Ausführungsform,
- Fig. 2: eine vergrößerte Darstellung eines Schnitts entlang der Linie II-II in Fig. 1,
- Fig. 3: eine schematische Seitenansicht eines erfindungsgemäßen Rundbeckenräumers nach einer zweiten Ausführungsform,
- Fig. 4: eine schematische Seitenansicht des Mittelbauwerks eines erfindungsgemäßen Rundbeckenräumers nach einer weiteren Ausführungsform und
- Fig. 5: einen Ausschnitt einer Draufsicht auf den Rundbeckenräumer nach Fig. 4.

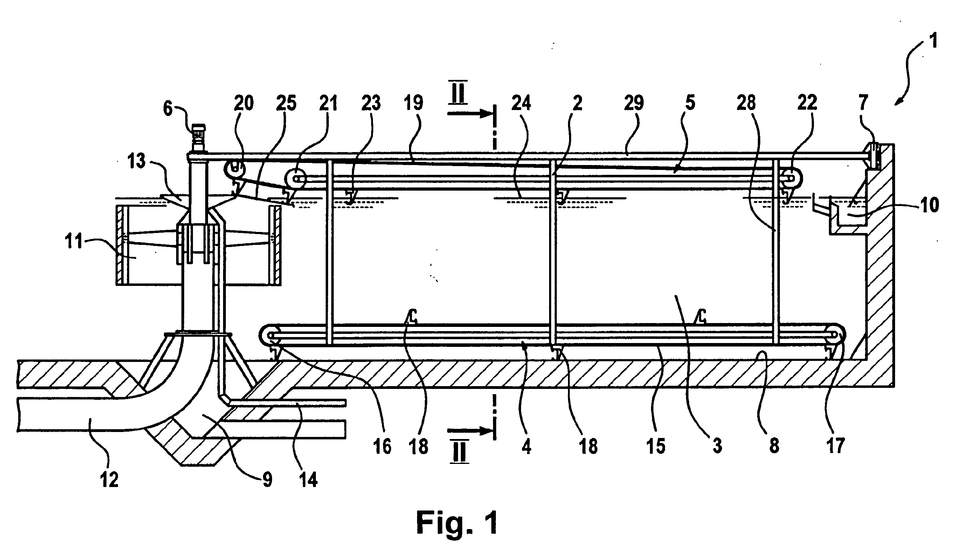

Der in Fig. 1 dargestellte Rundbeckenräumer 1 weist einen Räumerarm 2 auf, der im Wesentlichen die Hälfte eines Rundbeckens 3 überspannt. An dem Räumerarm 2 sind ein Bodenräumwerk 4 und ein Schwimmschlammräumwerk 5 ausgebildet. Der Räumerarm 2 ist in der Mitte des Klärbeckens 3 durch ein zentrales Lager 6 und an dem äußeren Rand des Klärbeckens 3 durch ein Lager 7 so gelagert, dass der Räumerarm 2 in dem Klärbecken 3 rotieren kann. Hierzu ist ein in der Figur nicht dargestellter Antrieb vorgesehen, der entweder in der Beckenmitte oder an dem Lager 7 ausgebildet sein kann.

Das runde Klärbecken 3 weist einen Beckenboden 8 auf, der zur Beckenmitte hin in einen Schlammsammeltrichter 9 mündet. An dem äußeren Rand des Klärbeckens 3 ist ein Überlauf 10 ausgebildet, durch den gereinigtes Wasser aus dem Klärbecken 3 abfließen kann. Über einen zentral in dem Klärbecken 3 angeordneten Wassereinlauf 11 wird dem Klärbecken 3 zu reinigendes Abwasser aus einer Abwasserzulaufleitung 12 zugeführt. Oberhalb des Wassereinlaufs 11 ist ein zweiter Schlammsammeltrichter 13 vorgesehen, über den Schwimmschlamm durch eine Leitung (Schwimmschlammabflussrohr) 14 abgeführt werden kann.

Das Bodenräumwerk 4 des Räumerarms 2 ist durch einen Bandräumer 15 gebildet, der ein um zwei Umlenkrollen 16 und 17 umlaufendes Band aufweist. An dem Band sind mehrere Räumbalken bzw. Räumschilde 18 befestigt, die so an dem Band um die Umlenkrollen 16 und 17 umlaufen, dass sie auf einem ersten Pfad entlang des Beckenbodens von außen zur Mitte des Klärbeckens hin bewegt werden und auf einem zweiten Pfad von der Mitte des Klärbeckens 3 nach außen zurücktransportiert werden. Entlang des ersten Pfades liegen die Räumschilde 18 näherungsweise an dem Beckenboden 8 an, so dass nur ein minimaler Spalt zwischen dem Beckenboden 8 und dem Räumschild 18 verbleibt. Über einen an einer der beiden Umlenkrollen 16 oder 17 angeordneten, nicht dargestellten Antrieb wird das Bodenräumwerk 4 angetrieben.

Das Schwimmschlammräumwerk 5 umfasst ebenfalls einen Bandräumer 19, der ein Band aufweist, das um Umlenkrollen 20, 21 und 22 geführt wird. An dem umlaufenden Band sind mehrere Räumbalken bzw. Räumschilde 23 angeordnet. Die Räumschilde werden dabei auf einem ersten Pfad von der Außenseite des Klärbeckens 3 zu dessen Mitte hin bewegt, wobei die Räumschilde 23 teilweise in die Oberfläche 24 der in dem Klärbecken enthaltenen Flüssigkeit eintauchen. Auf einem weiteren Pfad, der sich zwischen der Umlenkrolle 21 und der Umlenkrolle 20 erstreckt, werden die Räumschilde 23 auf einer Rampe 25 aus dem Wasser gehoben. Die Rampe 25 mündet in den Schwimmschlammsammeltrichter 13. Auf einem zweiten Pfad werden die Räumschilde 23 zwischen der Umlenkrolle 20 und der Umlenkrolle 22 außerhalb der Flüssigkeit wieder an den Beckenrand zurücktransportiert.

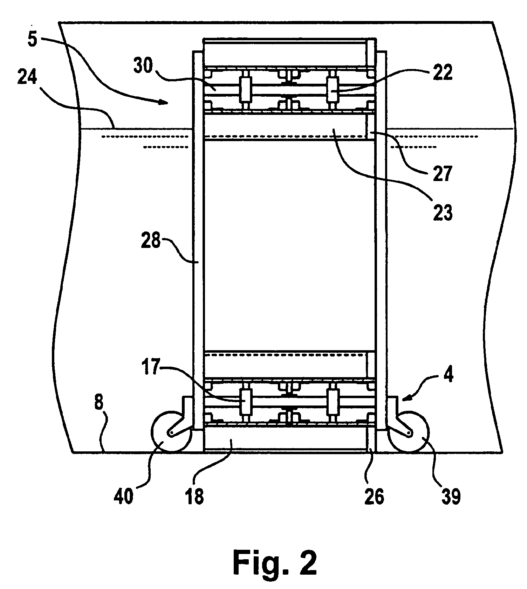

An der in Figur 2 rechten Seite der Bandräumer 15 und 19 sind jeweils Schottbleche 26 bzw. 27 vorgesehen, die in Bewegungsrichtung des Räumerarms 2 den Bandräumern 15, 19 nachlaufen. Die Schottbleche 26 grenzen dabei dicht an die Räumschilde 18 des unteren Bandräumers 15 an, während die Schottbleche 27 dicht an die Räumschilde 23 des oberen Bandräumers 19 angrenzen.

Während des Betriebs des Rundbeckenräumers 1 bilden die Schottbleche 26 und 27 so zusammen mit den entsprechenden Räumschilden 18 und 23 Winkel, durch die der Bodenschlamm bzw. der Schwimmschlamm durch das Klärbecken 3 transportiert wird. Der durch die Bandräumer 15 und 19 in radialer Richtung bewegte Schlamm kann dadurch bei einer Rotation des Räumerarms 2 in dem Klärbecken 3 nicht seitlich von den Räumschilden 18 oder 23 abgleiten, wodurch die Wirkungsweise des Boden- bzw. des Schwimmschlammräumwerks 4, 5 beeinträchtigt würde.

Der Räumerarm 2 ist aus mehreren vertikalen Stäben 28 und horizontalen Stäben 29 aufgebaut, die die vertikalen Stäbe 28 verbinden. Weitere horizontale Stäbe 30 sind zwischen den vertikalen Stäben 28 befestigt. Die Stäbe 28, 29 und 30 bilden somit ein Stabfachwerk, welches das Bodenräumwerk 4 und das Schwimmschlammräumwerk 5 trägt.

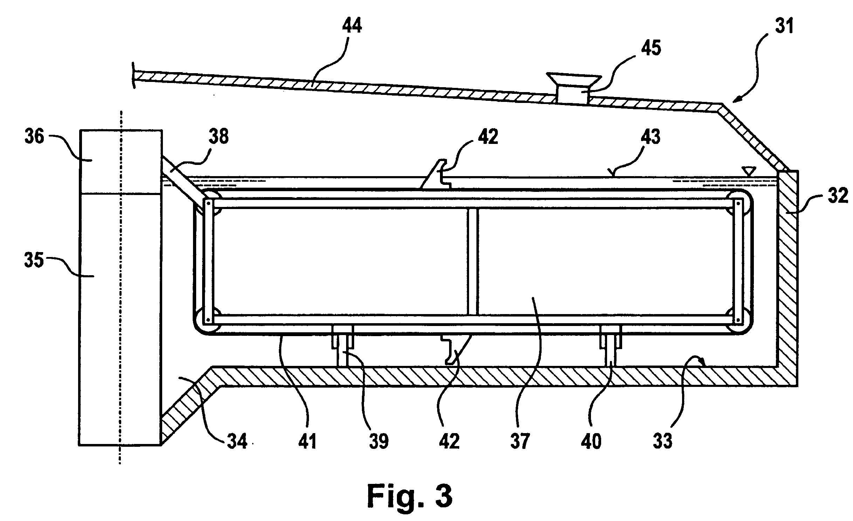

Eine zweite Ausführungsform eines Rundbeckenräumers 31 ist in Figur 3 schematisch in einem Becken 32 dargestellt. Das Becken 32 ist mit einem im Wesentlichen flachen Boden 33 ausgestattet, der zur Beckenmitte hin in einen Schlammsammeltrichter 34 mündet. Ein weiterer Schwimmschlammsammeltrichter sowie ein Ablauf für gereinigtes Wasser, wie beispielsweise ein getauchtes Auslaufrohr, können in dem Becken 32 vorgesehen sein. In einem Mittelbauwerk 35 sind ein Wassereinlauf sowie ein Antrieb 36 angeordnet.

Ein Räumerarm 37 ist als Fachwerk modular aus einzelnen Stäben zusammengesetzt und über einen Arm 38 mit dem Antrieb 36 verbunden. Der Räumerarm 37 ist auf Führungsrollen 39 und 40 gelagert, die auf dem Boden 33 des Beckens 32 laufen.

Um den Räumerarm 37 läuft ein Bandräumer 41 mit mehreren Räumschilden 42, die mit dem Räumerarm 37 nachlaufenden Schottblechen (in Figur 3 nicht gezeigt) ausgestattet sind. Die Räumschilde 42 werden dabei entlang des Beckenbodens 33 von außen zur Mitte des Beckens 32 hin bewegt, in der Beckenmitte vertikal nach oben geleitet, entlang der Oberfläche 43 der Flüssigkeit von der Mitte des Beckens 32 nach außen und schließlich am Beckenrand vertikal nach unten zurückgeführt. Schlamm, der sich am Boden 33 des Beckens 32 abgesetzt hat, wird so durch den Bandräumer 41 zu dem Schlammsammeltrichter 34 gefördert, während gleichzeitig Schwimmschlamm durch den Bandräumer 41 an den Beckenrand geleitet wird. Der Bandräumer 41 bildet somit sowohl ein Bodenräumwerk als auch ein Schwimmschlammräumwerk.

Auf dem Beckenrand liegt eine Abdeckung 44 auf, die das Becken 32 vollständig überspannt. Diese Abdeckung kann das Entweichen von Gasen aus dem Becken 32 minimieren. Zur Be- oder Entlüftung des Beckens 32 sind Lüftungshauben 45 auf der Abdeckung 44 vorgesehen.

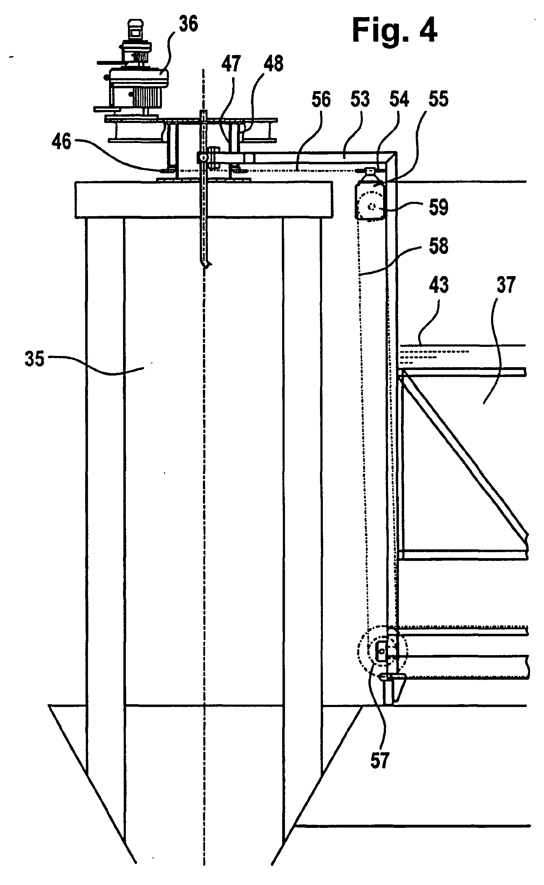

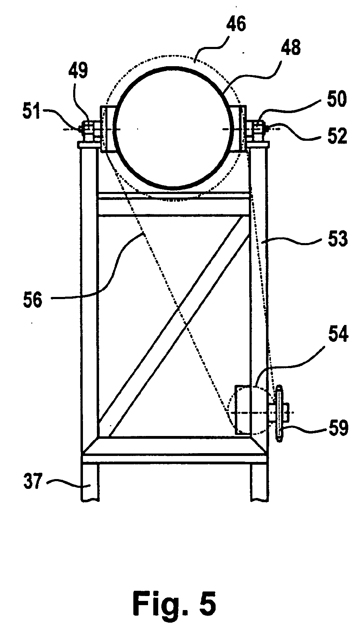

Fig. 4 und 5 zeigen eine weitere Ausführungsform des Rundbeckenräumers 31 mit einem um das Mittelbauwerk 35 rotierenden, von dem Antrieb 36 angetriebenen Räumerarm 37. An der Oberseite des Mittelbauwerks 35 ist ein mit einem ersten Zahnkranz 46 versehenes Rohr 47 ortsfest angeordnet. Das feststehende Rohr 47 wird von einem durch den Antrieb 36 antreibbaren äußeren Rohr 48 umgriffen, an dem über Laschen 49, 50 und Bolzen 51, 52 ein den Räumerarm 37 tragender Rahmen 53 angelenkt ist. Der Räumerarm 37 weist einen zweiten, mit diesem umlaufenden und drehbar gelagerten Zahnkranz 54 auf, der mit einem Umlenkgetriebe 55 verbunden ist. Die Zahnkränze 46 und 54 sind über eine erste Kette 56 miteinander verbunden, die im wesentlichen parallel zu der Ebene der Flüssigkeitsoberfläche 43 in dem Becken 32 verläuft.

In den Fig. 4 und 5 weist lediglich das Bodenräumwerk 4 einen Antriebszahnkranz 57 auf, der über eine zweite Kette 58 mit dem Abtriebszahnkranz 59 des Umlenkgetriebes 55 verbunden ist. Es ist jedoch auch möglich, dass neben dem Bodenräumwerk 4 oder alternativ hierzu das Schwimmschlammräumwerk 5 ebenfalls mit einem Antriebszahnkranz versehen ist, so dass das Bodenräumwerk 4 und das Schwimmschlammräumwerk 5 getrennt voneinander oder gemeinsam über die zweite Kette 58 antreibbar sind.

Wird der Räumerarm 37 von dem Antriebsmotor 36 in eine Rotation um das Mittelbauwerk 35 versetzt, dreht sich auch der über die erste Kette 56 mit dem ortsfesten ersten Zahnkranz 46 verbundene Zahnkranz 54 in Abhängigkeit der Rotationsgeschwindigkeit des Räumerarmes 37. Das Umlenkgetriebe 49 leitet diese Rotation des zweiten Zahnkranzes 54 um 90° umgelenkt auf den Abtriebszahnkranz 59, durch den wiederum über die zweite Kette 58 der Antriebszahnkranz 57 des Bodenräumwerks 4 und/oder des Schwimmschlammräumwerks 5 angetrieben wird. Auf diese Weise ist es möglich mit einem einzigen Antrieb 36 gleichzeitig den Räumerarm 37 und das Bodenräumwerk 4 und/oder das Schwimmschlammräumwerk 5 anzutreiben.

Alternativ zu der in den Fig. 4 und 5 gezeigten Antriebsgestaltung mit den Ketten 56 und 58 können diese auch ganz oder teilweise durch Zahnriemen, Drehwellen oder ähnliche Rotationsübertragungsmittel ersetzt werden. Weiter ist es auch möglich, die Zahnkränze 46 und 54 sowie die Kette 56 durch miteinander in direktem Eingriff stehende Zahnräder zu ersetzen. Durch geeignete Wahl der Getriebeparameter kann die Geschwindigkeit der Bandräumer optimal an die Rotationsgeschwindigkeit des Räumerarms 37 angepasst werden.

### Bezugszeichenliste

- 1: Rundbeckenräumer
- 2: Räumerarm
- 3: Klärbecken (Rundbecken)
- 4: Bodenräumwerk
- 5: Schwimmschlammräumwerk
- 6: mittleres Lager
- 7: äußeres Lager
- 8: Beckenboden
- 9: Schlammsammeltrichter
- 10: Überlauf
- 11: Wassereinlauf
- 12: Abwasserzulaufrohr
- 13: Schwimmschlammsammeltrichter
- 14: Schwimmschlammabflussrohr
- 15: Bandräumer
- 16: Umlenkrolle
- 17: Umlenkrolle
- 18: Räumschild
- 19: Bandräumer
- 20: Umlenkrolle
- 21: Umlenkrolle
- 22: Umlenkrolle
- 23: Räumschild
- 25: Rampe
- 26: Schottbleche
- 27: Schottbleche
- 28: vertikale Stäbe
- 29: horizontale Stäbe
- 30: horizontale Stäbe
- 31: Rundbeckenräumer
- 32: (Rund-)Becken
- 33: Beckenboden
- 34: Schlammsammeltrichter
- 35: Mittelbauwerk
- 36: Antrieb
- 37: Räumerarm
- 38: Arm
- 39: Führungsrolle
- 40: Führungsrolle
- 41: Bandräumer
- 42: Räumschild
- 43: Flüssigkeitsoberfläche
- 44: Abdeckung
- 45: Lüftungshaube
- 46: erster Zahnkranz
- 47: Rohr
- 48: äußeres Rohr
- 49: Lasche
- 50: Lasche
- 51: Bolzen
- 52: Bolzen
- 53: Rahmen
- 54: zweiter Zahnkranz
- 55: Umlenkgetriebe
- 56: erste Kette
- 57: Antriebszahnkranz
- 58: zweite Kette
- 59: Abtriebszahnkranz des Umlenkgetriebes

## Patentansprüche

1. Rundbeckenräumer, insbesondere für Klärbecken mit Belebtschlamm enthaltender Flüssigkeit, mit wenigstens einem um den Mittelpunkt des Beckens (3; 32) rotierenden Räumerarm (2; 37), an dem ein Bodenräumwerk (4) und ein Schwimmschlammräumwerk (5) angeordnet sind, **dadurch gekennzeichnet, dass** das Bodenräumwerk (4) und das Schwimmschlammräumwerk (5) in radialer Richtung des Beckens (3, 32) wirkende Räumwerke (15, 19; 41) sind.

2. Rundbeckenräumer nach Anspruch 1, **dadurch gekennzeichnet, dass** das Bodenräumwerk (4) und das Schwimmschlammräumwerk (5) jeweils einen Bandräumer (15, 19) mit mehreren voneinander beabstandete Räumbalken (18, 23) aufweisen, die in radialer Richtung in dem Becken (3) umlaufen.

3. Rundbeckenräumer nach Anspruch 2, **dadurch gekennzeichnet, dass** an den Räumbalken (18, 23) jeweils ein Schottblech (26, 27) vorgesehen ist, das bei Rotation des Räumerarms (2) dem Räumbalken (18, 23) nachläuft.

4. Rundbeckenräumer nach einem der vorangegangenen Ansprüche, **dadurch gekennzeichnet, dass** das Bodenräumwerk (4) und das Schwimmschlammräumwerk (5) jeweils einen voneinander getrennten Antrieb aufweisen.

5. Rundbeckenräumer nach einem der vorangegangenen Ansprüche, **dadurch gekennzeichnet, dass** der Bandräumer (15) des Bodenräumwerks (4) die Räumbalken (18) entlang eines ersten Pfades am Beckenboden (8) von außen zur Mitte des Beckens (3) hin bewegt und entlang eines zweiten Pfades oberhalb des ersten Pfades von der Mitte des Beckens (3) nach außen zurückführt.

6. Rundbeckenräumer nach Anspruch 5, **dadurch gekennzeichnet, dass** der Bandräumer (15) des Bodenräumwerks (4) eine angetriebene (16) und eine frei drehbare Umlenkrolle (17) aufweist.

7. Rundbeckenräumer nach einem der vorangegangenen Ansprüche, **dadurch gekennzeichnet, dass** der Bandräumer (19) des Schwimmschlammräumwerks (5) die Räumbalken (23) entlang eines ersten Pfades bereichsweise in die Flüssigkeitsoberfläche (24) des Beckens (3) eingetaucht von außen zur Mitte des Beckens (3) hin bewegt und entlang eines zweiten Pfades oberhalb des ersten Pfades von der Mitte des Beckens (3) nach außen zurückführt.

8. Rundbeckenräumer nach Anspruch 7, **dadurch gekennzeichnet, dass** der Bandräumer (19) des Schwimmschlammräumwerks (5) die Räumbalken (23) zwischen dem ersten und dem zweiten Pfad entlang eines weiteren Pfades bewegt, auf dem die Räumbalken (23) entlang einer in einen Schlammabzug (13) mündenden Rampe (25) aus der Flüssigkeit gehoben werden.

9. Rundbeckenräumer nach einem der Ansprüche 7 oder 8, **dadurch gekennzeichnet, dass** der Bandräumer (19) des Schwimmschlammräumwerks (5) eine angetriebene (20) und zwei frei drehbare Umlenkrolle (21, 22) aufweist.

10. Rundbeckenräumer nach Anspruch 1, **dadurch gekennzeichnet, dass** das Bodenräumwerk (4) und das Schwimmschlammräumwerk (5) durch einen gemeinsamen Bandräumer (41) gebildet werden.

11. Rundbeckenräumer nach Anspruch 10, **dadurch gekennzeichnet, dass** der gemeinsame Bandräumer (41) des Bodenräumwerks (4) und des Schwimmschlammräumwerks (5) die Räumbalken (42) entlang des Beckenbodens (33) von außen zur Mitte des Beckens (32) hin bewegt und entlang der Oberfläche (43) der Flüssigkeit von der Mitte des Beckens (32) nach außen zurückführt.

12. Rundbeckenräumer nach einem der Ansprüche 2 oder 10, **dadurch gekennzeichnet, dass** das Bodenräumwerk (4) und das Schwimmschlammräumwerk (5) einen gemeinsamen Antrieb aufweisen.

13. Rundbeckenräumer nach Anspruch 12, **dadurch gekennzeichnet, dass** der Antrieb (36) des Räumerarms (37) gleichzeitig das Bodenräumwerk (4) und/oder das Schwimmschlammräumwerk (5) antreibt.

14. Rundbeckenräumer nach Anspruch 12 oder 13, **dadurch gekennzeichnet, dass** an einem zentralen Mittelbauwerk (35), um das der Räumerarm (37) umläuft, feststehende erste Kraftübertragungsmittel (46) und an dem Räumerarm (37) mit diesem umlaufende zweite Kraftübertragungsmittel (54) angebracht sind, die miteinander in Eingriff stehen, wobei die zweiten Kraftübertragungsmittel (54) das Bodenräumwerk (4) und/oder das Schwimmschlammräumwerk (5) antreiben.

15. Rundbeckenräumer nach Anspruch 14, **dadurch gekennzeichnet, dass** die ersten Kraftübertragungsmittel (46) einen an dem zentralen Mittelbauwerk (35) ortsfest angeordneten ersten Zahnkranz (46) und die zweiten Kraftübertragungsmittel (54) einen an dem Räumerarm (37) drehbar gelagerten zweiten Zahnkranz (54) umfassen, die über eine erste Kette (56) miteinander verbunden sind.

16. Rundbeckenräumer nach Anspruch 14 oder 15, **dadurch gekennzeichnet, dass** das Bodenräumwerk (4) und/oder das Schwimmschlammräumwerk (5) jeweils einen Antriebszahnkranz (57) aufweisen, der über eine zweite Kette (58) mit dem Abtriebszahnkranz (59) eines Umlenkgetriebes (55) verbunden ist, welches mit dem zweiten Zahnkranz (54) in Verbindung steht.

17. Rundbeckenräumer nach einem der vorangegangenen Ansprüche, **dadurch gekennzeichnet, dass** der Räumerarm (2; 37) aus einem modularen Stabfachwerk besteht.

18. Rundbeckenräumer nach einem der vorangegangenen Ansprüche, **dadurch gekennzeichnet, dass** der Räumerarm (37) am Beckenboden (33) auf Führungsrollen (39, 40) gelagert ist, die dem Bodenräumwerk (4) nachlaufen.

19. Rundbeckenräumer nach einem der vorangegangenen Ansprüche, **dadurch gekennzeichnet, dass** der Räumerarm (2; 37) als Doppelbrücke ausgebildet ist, die den gesamten Durchmesser des Beckens (3; 32) überspannt.
